# EUROPÄISCHE PATENTSCHRIFT

(11) **EP 1 338 507 B1**
(45) Veröffentlichungstag und Bekanntmachung des Hinweises auf die Patenterteilung: **30.01.2008**
(21) Anmeldenummer: 02028939.3
(22) Anmeldetag: 24.12.2002
(51) Int. Cl.: B64D 11/00

(54) **Informations- und Anzeigeeinrichtung für eine Versorgungseinheit eines Passagierflugzeuges**
Information and display device for a passenger service unit in a passenger aircraft
Dispositif d'information et d'affichage pour une unité de service d'un avion de passagers

(30) Priorität: 22.02.2002 DE 10207641
(43) Veröffentlichungstag der Anmeldung: 27.08.2003
(73) Patentinhaber: Airbus Deutschland GmbH (HRB 43527), 21129 Hamburg (DE)
(72) Erfinder: Endress, Manfred, 21614 Buxtehude (DE); Grothkopp, Thorsten, 21244 Buchholz (DE)
(74) Vertreter: Habenicht, Wieland

(56) Entgegenhaltungen:
- DE-A1- 3 426 893
- DE-A1- 19 705 643
- DE-A1- 19 708 764
- US-A- 4 975 696
- US-A- 5 910 814

## Beschreibung

Die Erfindung betrifft eine Informations- und Anzeigeeinrichtung für eine Versorgungseinheit eines Passagierflugzeuges.

In der Passagierkabine eines Flugzeuges sind üblicherweise oberhalb der Passagiersitze Versorgungseinheiten, sogenannte PSU's (Passenger-Service-Units) angeordnet, die Versorgungs- und Informationsfunktionen dem Passagier zur Verfügung stellen. So sind in den Versorgungseinheiten beispielsweise Leselampen, Stewardruftasten, Hinweiszeichen und Lautsprecher integriert. Unter anderem aus DE 34 26 893 A1 sind derartige Passagierversorgungs- und Informationseinheiten bekannt. Bisher werden in den Versorgungseinheiten festgelegte, unveränderliche Informationen für die Passagiere angezeigt. Dieses sind in den meisten Fällen die Anschnall- (Fasten-Seat-Belt-) und Nichtraucher- (No-Smoking-) Zeichen. Hierfür werden bedruckte, hinterleuchtete Scheiben verwendet. Für die Hinterleuchtung werden Glühlampen oder LED eingesetzt. Nachteilig wirkt sich aus, dass die angezeigten Inhalte nicht oder nur durch Austausch der kompletten Anzeigemodule veränderbar sind. Die in der PSU zur Verfügung stehende Fläche kann daher nur für die Anzeige der beiden festgelegten Zeichen genutzt werden.

Sollen den Passagieren jedoch weitere informative oder unterhaltende Inhalte (z.B. Flughöhe, verbleibende Flugzeit, Anschlussflüge, Börsenkurse, Wetterbericht usw.) angezeigt werden, so ist der Einbau komplexer Informationssysteme, wie Inflight Entertainment- (IFE-) oder Passenger Flight Information- (PFIS-) Systeme erforderlich. Diese Systeme erfordern sehr hohe Investitionen und beinhalten relativ schwere Komponenten. So sind beispielsweise Bandlaufgeräte (Video Tape Reproducer), Lagereinheiten (Cassette Stowage Units) und Steuergeräte vorgesehen. Weiter ist in der Kabine der Einbau von zusätzlichen Bildschirmen erforderlich.

In vielen Fällen sind solche Systeme jedoch überdimensioniert. Auf Kurzstreckenflügen verbleibt oft kaum Zeit, ein solches System sinnvoll zu nutzen. Weiter kommen auf diesen Flügen hauptsächlich Flugzeuge zum Einsatz, bei denen das zusätzliche Gewicht von derartigen Informations-Systemen zu einer nennenswerten Reduzierung der Zuladung und damit zu einem unwirtschaftlicheren Betrieb der Flugzeuge führt. Der wirtschaftliche Einsatz komplexer Inflight Entertainment-Systeme mit zusätzlichen Monitoren und relativ schweren Geräten ist daher in diesen Fällen kaum möglich.

Der vorliegenden Erfindung liegt somit die Aufgabe zugrunde, eine gattungsgemäße Informations- und Anzeigevorrichtung auszubilden, die Passagieren und der Besatzung informative und/oder unterhaltende Inhalte unter Vermeidung der beschriebenen Nachteile anzeigt. Insbesondere sind unter Vermeidung von relativ schweren Komponenten und zusätzlichen Bildschirmen flexible Informationsinhalte zur Verfügung zu stellen, was eine erhebliche Komfortverbesserung für den Passagier sowie eine Arbeitserleichterung für den Flugbegleiter während des Fluges bedeutet.

Diese Aufgabe wird bei einer gattungsgemäßen Informations- und Anzeigevorrichtung durch die im Patentanspruch 1 genannten Maßnahmen gelöst.

Dabei ist insbesondere vorteilhaft, dass gegenüber dem bisherigen Stand der Technik eine flexible, universelle Nutzung der zur Verfügung stehenden Fläche in der Versorgungseinheit möglich ist. Hierdurch wird ein erheblicher Mehrwert für die Passagiere, Fluggesellschaften und deren Partner erzielt.
Es müssen keine zusätzlichen Displays außerhalb der Versorgungseinheit in der Passagierkabine eines Flugzeuges montiert werden. Dieses führt zu deutlichen Gewichts- und Kostenreduzierungen. Bei Flugzeugen mit einem bereits vorhandenen Datenübertragungssystem (z.B. CIDS) ist eine Integration der Funktionalitäten in dieses System möglich und damit wird eine weitere Reduktion der Komponenten, Gewichte und Investitionen erreicht.
Das Systemgewicht und die Systemkosten sind gegenüber den bekannten Inflight-Entertainment-Systemen erheblich reduziert.
Durch eine erhebliche Erhöhung und Flexibilität von Informationsinhalten kann beispielsweise die Anzeige aller Informationen einschl. der sicherheitsrelevanten mehrsprachig erfolgen. Auch sind die Anzeigen vorteilhaft als Hilfsmittel für schwerhörige Passagiere bei Ansagen durch das Flugpersonal.

Weiterbildungen und vorteilhafte Ausgestaltungen sind in den Ansprüchen 2 bis 10 angegeben. Weitere Vorteile ergeben sich aus der nachfolgenden Detailbeschreibung.

In der Zeichnung sind Ausführungsbeispiele der Erfindung dargestellt, die nachstehend anhand der Figuren 1 bis 4 näher beschrieben sind. In den Figuren sind gleiche Bauteile mit gleichen Bezugszeichen versehen.

Es zeigen:
- Fig. 1: eine schematische Darstellung der Komponenten der erfindungsgemäßen Informations- und Anzeigeeinrichtung einer ersten Ausführungsform,
- Fig. 2: die Informations- und Anzeigeeinrichtung in einer zweiten Ausführungsform,
- Fig. 3: eine Perspektivdarstellung einer Versorgungseinheit mit integriertem Display der erfindungsgemäßen Informations- und Anzeigeeinrichtung
und
- Fig. 4: Varianten der Darstellung von Informationen auf dem Anzeigedisplay.

Eine erfindungsgemäße Informations- und Anzeigeeinrichtung 1 besteht aus mehreren Komponenten sowohl am Boden als auch an Bord von Flugzeugen, um folgende Funktionalitäten zur Verfügung zu stellen:
- Eingabe und Formatierung von Informationsinhalten am Boden und/oder an Bord eines Passagierflugzeuges
- Schnittstelle zu anderen Flugzeugsystemen (z.B. Avionik)
- Schnittstelle zum Flugzeug zur Übertragung von Informationen vom Boden oder aus der Luft
- Speicherung von Informationsinhalten an Bord des Flugzeuges
- Übertragung des Informationsinhaltes zu mehreren Anzeigedisplays
- Anzeige der Informationsinhalte
- Möglichkeit der Bedienung des Systems und Auswahl von Informationen

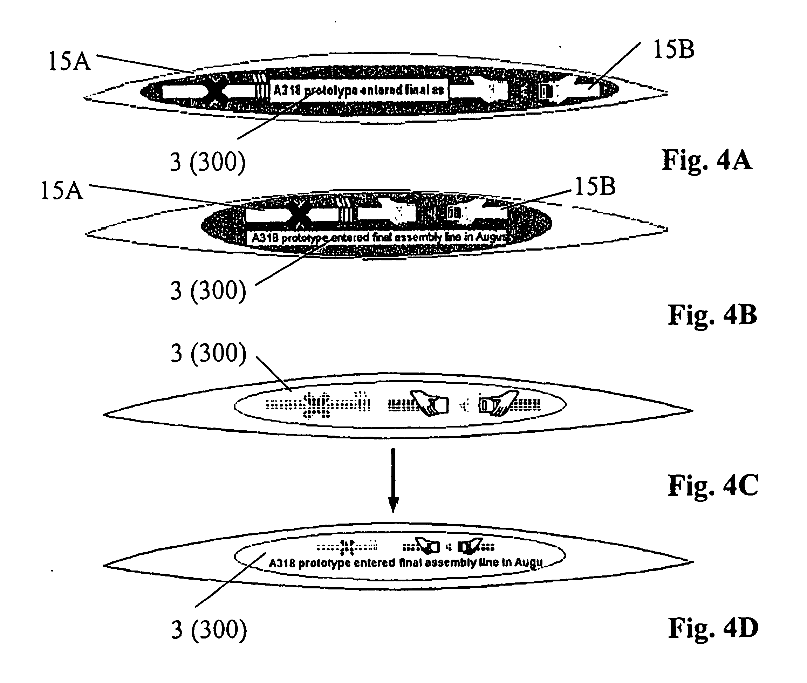

Aufgrund von unterschiedlichen technischen Gegebenheiten in einem Flugzeug ist es erforderlich, entsprechend verschiedene Ausführungsformen der Informations- und Anzeigeeinrichtung vorzusehen.

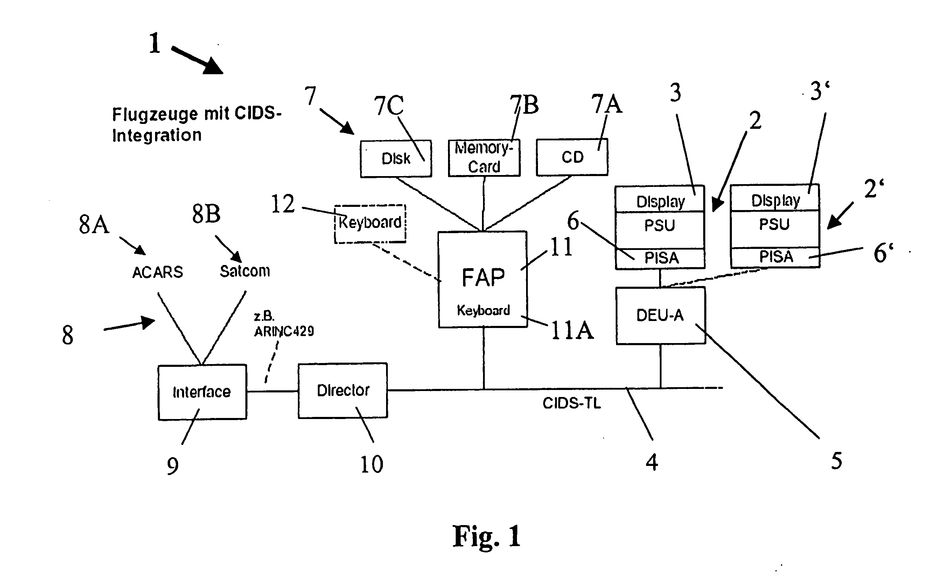

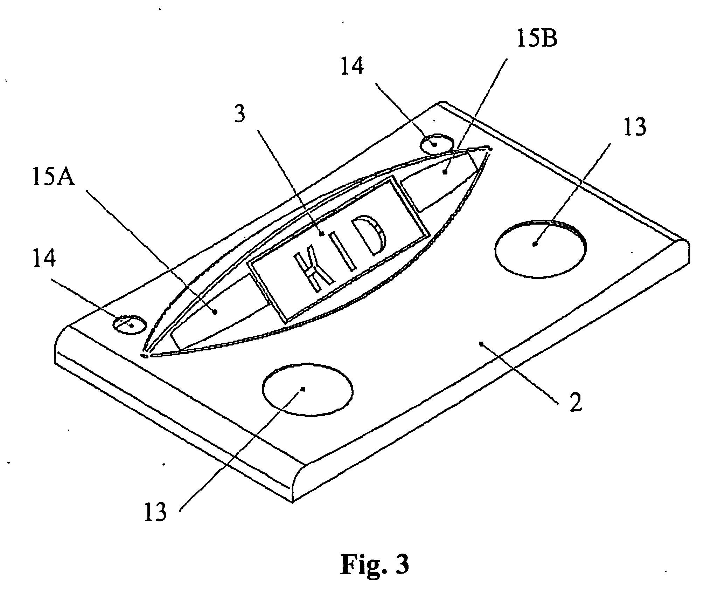

In Fig. 1 ist der Aufbau der Informations- und Anzeigeeinrichtung 1 in einer ersten Ausführungsform gezeigt, wobei eine Integration dieser Einrichtung 1 in ein im Flugzeug vorhandenes System zur Durchführung von passagierbezogenen und/oder flugbegleiterbezogenen Funktionen, genannt CIDS (Cabin Intercommunication Data System) erfolgt. Ein derartiges System ist beispielsweise aus DE 34 26 893 bekannt, welches unter anderem passagierbezogene Funktionen in der Passagierkabine eines Flugzeuges zur Verfügung stellt. Üblicherweise oberhalb von Passagiersitzen sind Versorgungseinheiten 2 (bzw. 2'), sogenannte PSU's (Passenger-Service-Units) angeordnet, die Versorgungs- und Informationsfunktionen dem Passagier zur Verfügung stellen. Unter anderem sind Leselampen, Stewardruftasten, Hinweiszeichen und Lautsprecher vorgesehen (siehe auch Fig. 3). Jeweils ein Anzeigedisplay 3, 3' ist an einer Versorgungseinheit 2 oder 2' angeordnet. Das Anzeigedisplay 3 oder 3' ist als ein grafikfähiges Display zur flexiblen Anzeige von Informationen vorgesehen. Auf diesem Display 3, 3' können sowohl die sicherheitsrelevanten Hinweiszeichen (Anschnallzeichen, Nichtraucherzeichen usw.) als auch informative und unterhaltende Inhalte angezeigt werden.
Einige Möglichkeiten der Anzeige und Inhalte von Informationen sind näher in der Fig. 4 dargestellt. Die Übertragung der Informationen erfolgt in dieser Ausführungsform über ein Datenbus-System 4, welches bereits für ein vorhandenes Datenübertragungssystem (bekannt als CIDS-System) in der Passagierkabine installiert ist. Zu diesem System gehört weiterhin eine adressierbare Decoder/Encoder-Einheit 5 sowie auch eine Schnittstellen- und Versorgungseinheit 6, 6', genannt PISA (Passenger Interface and Supply Adapter), die als Kontroll- und Steuerungseinheiten für die jeweils zugeordneten Versorgungseinheiten 2, 2' vorgesehen sind. Die Einspeisung der Informationen kann einerseits über eine airlinespezifische Schnittstelle oder Standardschnittstellen erfolgen, wobei sowohl Informationen vorgesehen sind, die in einem Speichermedium 7 abgelegt sind, als auch während eines Fluges aktualisierte Daten, die den Avionik-Systemen des Flugzeugs entstammen oder über eine geeignete drahtlose Übertragungstechnik 8 (z.B. ACARS 8A) vom Boden zum Flugzeug oder über Satellitentechnik (z.B. Satcom 8B) übertragen werden. Die so empfangenen Daten werden über eine entsprechende Schnittstelle 9 und einen Director 10 (Zentralrechner des CIDS) in das flugzeuginterne Datenbussystem 4 eingespeist.
Als Speichermedien können üblicherweise bekannte Techniken zum Einsatz kommen, wie CD-Rom's 7A, Memory-Cards 7B und/oder Disketten 7C oder USB-Speicher (nicht gezeigt). Eine Auswahl, Änderung, Einspeisung der Informationen durch Flugbegleiter oder Flugpersonal ist vorgesehen über ein Bedien-Paneel 11 mit optional einer zusätzlichen Tastatur 12 oder über einen Touchscreen des Flight-Attendant-Paneel 11A des CIDS-Systems.
Mit der Nutzung des CIDS-Systems ist es darüber hinaus möglich, die Anzeige verschiedener Inhalte abhängig von der Passagierklasse (Kabinenzone) zu realisieren. So können beispielsweise besondere informationen/Angebote für die 1ₛₜ Class, Börsenkurse in der Business Class und die Flughöhe in der Economy Class eingeblendet werden. Eine individuelle Adressierung der Sitze und damit eine sitzplatzabhängige Anzeige von Informationsinhalten ist bei Nutzung eines geeigneten Adressierungsmechanismus ebenfalls möglich. Die hierfür notwendige Information des Kabinenlayouts können dem CIDS-System entnommen werden.

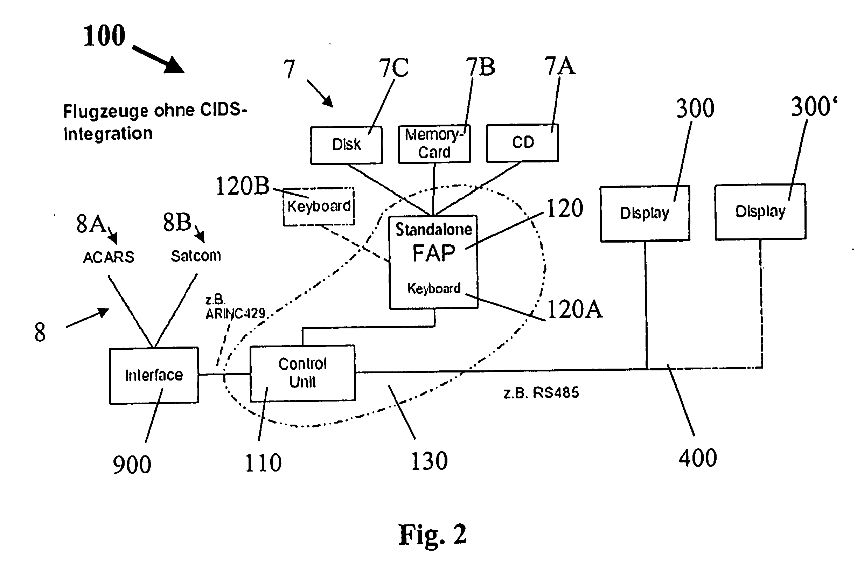

In Fig. 2 ist eine zweite Ausführungsform einer Informations- und Anzeigeeinrichtung 100 gezeigt, wobei die wesentlichen Komponenten der Einrichtung 100 den Komponenten der Informations- und Anzeigeeinrichtung 1 der ersten Ausführungsform entsprechen. So wird grundsätzlich auf die vorhergehende Beschreibung verwiesen. Für die Übertragung der Daten kann hier jedoch nicht auf ein im Flugzeug bereits installiertes Datenübertragungssystem, wie das genannte CIDS-System, zurückgegriffen werden. Als ein Datenbussystem 400 sind sowohl drahtgebundene beispielsweise ein auf den Standard RS485 basierendes System als auch drahtlose Systeme wie beispielsweise Wireless LAN, Bluetooth oder Infrarot nutzbar. Die Anzeigedisplays 300 bzw. 300' sind räumlich jeweils in eine Versorgungseinheit integriert (siehe Fig. 3), die Informationsübertragung kann jedoch unabhängig zu den anderen Funktionen der Versorgungseinheit erfolgen.
Die Einspeisung der Informationen kann wie bereits beschrieben über ein Speichermedium 7, wie unter anderem CD-Rom 7A, Memory-Card 7B, Diskette 7C erfolgen oder auch über eine geeignete drahtlose Übertragungstechnik 8 (z.B. ACARS 8A) vom Boden zum Flugzeug oder über Satellitentechnik (z.B. Satcom 8B) vorgenommen werden. Auch können während eines Fluges aktualisierte Daten, die den Avionik-Systemen des Flugzeugs entstammen, genutzt werden. Die so empfangenen Daten werden über eine entsprechende Schnittstelle 900 und einer Steuer- und Kontrolleinheit 110 in das flugzeuginterne Datenbussystem 400 eingespeist. Eine Auswahl, Änderung, Einspeisung von Informationen oder eine mögliche Zuordnung der Informationen zu einer Klasseneinteilung ist vorgesehen über eine Rechen- und Bedieneinheit 120 und/oder eine Steuer- und Kontrolleinheit 110. Eine individuelle Adressierung der Sitze und damit der anzuzeigenden Inhalte flexibel je Sitz ist bei Nutzung eines geeigneten Adressierungsmechanismus ebenfalls möglich. Die Rechen- und Bedieneinheit 120 weist entweder ein Bedien-Paneel 120A und/oder eine zusätzliche Tastatur 120B auf. Die manuelle Konfiguration/Bedienung kann bereits am Boden oder während des Fluges durch Flugbegleiter oder Flugpersonal vorgenommen werden. Vorzugsweise ist die Kontroll- und Steuereinheit 110 und die Rechen- und Bedieneinheit 120 zu einer Geräteeinheit 130 zusammengefasst.
In Fig. 3 ist in einer perspektivischen Darstellung eine Versorgungseinheit 2 dargestellt. In eine derartige Versorgungseinheit 2 - auch genannt PSU (Passenger Service Unit) - ist das Anzeigedisplay 3 bzw. 300 der erfindungsgemäßen Informations- und Anzeigeeinrichtung1 bzw. 100 integriert. Das Anzeigedisplay 3 bzw. 300 ist anstelle der bisher verwendeten hinterleuchteten Scheiben für die Hinweiszeichen "Bitte anschnallen" und "Bitte nicht rauchen" eingesetzt. Das Anzeigedisplay 3 ist in diesem Bereich an zentraler Stelle angeordnet. Eine Anordnung von Hinweiszeichen 15A und 15B für eine Anzeige "Bitte anschnallen" und "Nichtrauchen" erfolgt links bzw. rechts neben dem Display 3. In die Versorgungseinheit 2 sind weiterhin Leseleuchten 13 und Ruftasten 14 integriert.

Es können unterschiedliche Displaytechnologien zum Einsatz kommen. Hierbei ist jedoch die erforderliche Ablesbarkeit unter im Flugzeug vorliegenden Lichtverhältnissen zu berücksichtigen. Hierbei können sowohl mehrfarbige als auch monochrome Displays eingesetzt werden. Dieses können Textdisplay, Grafikdisplays oder eine Mischung beider sein. Mögliche Technologien aus heutiger Sicht sind beispielsweise: LCD (Liquid Crystal Display), VFD (Vacuum Fluorescence Display), Flexible LCD (Liquid Crystal Display), Microdisplay, LED-Display (Light Emitting Diode), OLED-Display (Organic Light Emitting Diode), TFT-Display (Thin-Film Transistor) oder FED (Field Emitting Display). Für eine ausreichende Sichtbarkeit und Signalisierung kann das Display bzw. die Hintergrundbeleuchtung dimmbar ausgeführt sein. Ein Verstärkung der Signalwirkung kann beispielsweise zusätzlich erzielt werden durch ein Invertieren der Darstellung, ein Blinken der Hintergrundbeleuchtung oder eine unterschiedliche farbliche Gestaltung der Hintergrundbeleuchtung.

In Fig. 4 sind verschiedene Varianten der Anzeige von Informationen auf dem Anzeigedisplay 3 bzw. 300 ersichtlich. Es ist ersichtlich, dass die grafischen Zeichen in ihrer Symbolform übernommen wurden. Zusätzlich können neben den sicherheitsrelevanten Signs (Fasten-Seat-Belt, No Smoking usw.) auch informative und unterhaltende Inhalte angezeigt werden.
Als Beispiele sind zu nennen:
- Fluginformationen, beispielsweise Flughöhe, verbleibende Flugzeit, geplante Ankunftszeit, Außentemperatur, Name der Besatzung, Infos zum Flugzeug
- Sicherheitsinformationen
- Werbung, Sonderangebote der Airlines und ihrer Partner
- Aktuelle Informationen wie Nachrichten, Sportinformationen, Börsenkurse, Wetterbericht
- Flughafen-Informationen
- Gates für Anschlußflüge und Abflugzeiten, Gate Changes
- Aktuelle, wichtige Nachrichten

Die Inhalte können mehrsprachig dargestellt werden. Es können sowohl Text- als auch Grafikinformationen präsentiert werden. Eine flexible Auswahl und Anpassung der Informationsinhalte kann - abhängig von den Inhalten, die dem Passagier zur Verfügung gestellt werden sollen - von der Airline bedarfsweise erfolgen.
Als Beispiel ist gezeigt, dass ein Anzeigedisplay 3 bzw. 300 (für Informationen in Ticker-Form, Textinformationen) auch kombiniert werden kann mit den bekannten Hinweisschildern 15A, 15B (Fig. 4A, 4B).
In den Fig. 4C und 4D sind Hinweiszeichen und Informationen auf einem gemeinsamen Display 3 (300) (Farbe oder Monochrom) angezeigt. Die Textinformationen sind in der gezeigten Darstellung in Fig. 4D unterhalb der Hinweiszeichen angeordnet. Möglich ist es weiterhin, dass ein Umschalten zwischen Hinweiszeichen und anderen Informationstexten erfolgt, d.h. dass bei Notwendigkeit die sicherheitsrelevanten Zeichen eingeblendet werden und ansonsten Informationen auf dem Display 3 angezeigt werden.

## Patentansprüche

1. Informations- und Anzeigeeinrichtung für ein Passagierflugzeug mit
mehreren Passagiersitzen und mehreren Versorgungseinheiten (2, 2'), bestehend aus einer Bedien- und Steuereinheit (10, 11, 11A, 5, 6, 6') zur Einspeisung und Auswahl von Informationen,
mehreren Anzeigedisplays (3, 3') für die sitzplatzabhängige Anzeige von Informationsinhalten und
einem Datenbussystem
**dadurch gekennzeichnet, dass**
jeweils ein Anzeigedisplay (3, 3') in jede Versorgungseinheit (2, 2') integrierbar ist und über das Datenbussystem (4) mit der Bedien- und Steuereinheit (10, 11,11A, 5, 6, 6') verbunden ist, so dass sicherheitsrelevante Hinweiszeichen sowie Informationsinhalte flexibel angezeigt werden können.

2. Informations- und Anzeigeeinrichtung nach Anspruch 1, **dadurch gekennzeichnet, dass** das Datenbussystem (4) und zumindest teilweise Bedien- und Steuereinheiten (10, 11, 11A, 5, 6, 6') mittels eines im Flugzeug vorhandenen Datenübertragungssystems und dazugehörigen Komponenten (4, 10, 11, 11A, 5, 6, 6') gebildet sind.

3. Informations- und Anzeigeeinrichtung nach Anspruch 1, **dadurch gekennzeichnet, dass**
das Datenbussystem (400) als drahtgebundenes, beispielsweise ein auf den Standard RS485 basierendes System oder als drahtloses System, wie Wireless LAN, Bluetooth- oder Infrarot-System ausgebildet ist.

4. Informations- und Anzeigeeinrichtung nach einem der Ansprüche 1 bis 3, **dadurch gekennzeichnet, dass**
als Informationseingabemittel (7, 8) sowohl Speichermedien (7, 7A, 7B, 7C) als auch Schnittstellen (9, 900) zur drahtlosen Übertragung (8) von zum Flugzeug übermittelte Daten (8A, 8B) oder Schnittstellen zur Übertragung von Daten aus dem Avionik-System des Flugzeuges vorgesehen sind.

5. Informations- und Anzeigeeinrichtung nach einem der Ansprüche 1 bis 4, **dadurch gekennzeichnet, dass**
als Speichermedium (7) CD-Rom's (7A), Memorycards (7B), Disketten (7C) und/oder USB-Speicher vorgesehen sind.

6. Informations- und Anzeigeeinrichtung nach einem der Ansprüche 1 bis 5, **dadurch gekennzeichnet, dass**
als drahtlose Übertragungstechnik (8) Systeme vom Boden zum Flugzeug (8A) oder Satellitentechnik (8B) nutzbar sind.

7. Informations- und Anzeigeeinrichtung nach einem der Ansprüche 1 bis 6, **dadurch gekennzeichnet, dass**
für die Rechen- und Bedieneinheit (10, 11; 120) eine direkte Eingabe/Bedienung über ein Bedien-Paneel (11A, 120A) und/oder über eine extern anschließbare Tastatur (12, 120B) vorgesehen ist.

8. Informations- und Anzeigeeinrichtung nach einem der Ansprüche 1 bis 7, **dadurch gekennzeichnet, dass**
die Kontroll- und Steuereinheit (110) und die Rechen- und Bedieneinheit (120) zu einer Geräteeinheit (130) zusammengefasst sind.

9. Informations- und Anzeigeeinrichtung nach einem der Ansprüche 1 bis 8, **dadurch gekennzeichnet, dass**
eine Ansteuerung der einzelnen Anzeigedisplays (3, 3', 300, 300') zur Informationsübermittlung sitzplatzbezogen und/oder abhängig von der Passagierklasseneinteilung durch individuelle Adressierung der Information erfolgt.

10. Informations- und Anzeigeeinrichtung nach einem der Ansprüche 1 bis 9, **dadurch gekennzeichnet, dass**
das Anzeigedisplay (3, 300) ein gemeinsames Display für Hinweiszeichen und Informationsinhalten aufweist.

## Claims

1. An information and display device for a passenger aircraft with a plurality of passenger seats and a plurality of supply units (2, 2') comprising:
an operating and control unit (10, 11, 11 A, 5, 6, 6') for feeding in and selecting information;
a plurality of displays (3, 3') for the seat-dependent display of information contents; and
a data bus system,
**characterised in that**
a display (3, 3') is arranged to be integrated in each supply unit (2, 2') and to be connected to the operating and control unit (10, 11, 11A, 5, 6, 6') by means of said data bus system (4) so that safety-relevant reference symbols and information contents can be flexibly displayed.

2. The information and display device according to Claim 1, **characterised in that** the data bus system (4) and at least partial operating and control units (10, 11, 11A, 5, 6, 6') are formed by means of a data transmission system and associated components (4, 10, 11, 11 A, 5, 6, 6') installed in the aircraft.

3. The information and display device according to Claim 1, **characterised in that** the data bus system (400) is designed as a wire-bound system, for example a system based on the standard RS485, or as a wireless system such as Wireless LAN, Bluetooth or Infrared system.

4. The information and display system according to one of Claims 1 to 3, **characterised in that** both storage media (7, 7A, 7B, 7C) and interfaces (9, 900) are provided as information input means (7, 8) for the wireless transmission (8) of data (8A, 8B) communicated to the aircraft or interfaces for transmitting data from the avionic systems of the aircraft.

5. The information and display device according to one of Claims 1 to 4, **characterised in that** CD-ROM's (7A), memory cards (7B), diskettes (7C) and/or USB memories are provided as the storage medium (7).

6. The information and display device according to one of Claims 1 to 5, **characterised in that** ground to air systems (8A) or satellite technology (8B) can be used as wireless transmission technology (8).

7. The information and display device according to one of Claims 1 to 6, **characterised in that** a direct input/control is provided by means of a control panel (11A, 120A) and/or an externally connectable keyboard (12, 120B) is provided for the computing and operating unit (10, 11; 120).

8. The information and display device according to one of Claims 1 to 7, **characterised in that** the supervision and control unit (110) and the computing and operating unit (120) are combined to form one device unit (130).

9. The information and display device according to one of Claims 1 to 8, **characterised in that** the individual displays (3, 3', 300, 300') for the communication of information are actuated in a seat-related manner and/or as a function of the passenger classification based on individual addressing of the information.

10. The information and display device according to one of Claims 1 to 9, **characterised in that** the display (3, 300) has a common display for reference symbols and information contents.

## Revendications

1. Dispositif d'information et d'affichage pour un avion de passagers, avec plusieurs sièges de passagers et plusieurs unités de service (2, 2'), comportant les éléments suivants:
une unité de commande (10, 11, 11A, 5, 6, 6') pour la saisie et la sélection d'informations, plusieurs écrans d'affichage (3, 3') pour un afficheur relié au siège, pour l'indication de contenus d'informations et d'un système de bus de données,
**caractérisé en ce que**
un écran d'affichage (3, 3') est intégrable dans chacune des unités de service (2, 2'), tout en étant relié à l'unité de commande (10, 11, 11A, 5, 6, 6') par le biais du système de bus de données (4), de façon à ce que des consignes de sécurité ainsi que des contenus d'informations puissent être affichés de manière flexible.

2. Dispositif d'information et d'affichage selon la revendication 1, **caractérisé en ce que** le système de bus de données (4) et au moins partiellement les unités de commande (10, 11, 11A, 5, 6, 6') sont conçus au moyen d'un système de transmission de données mis en place dans l'avion et au moyen des composants correspondants (4, 10, 11, 11A, 5, 6, 6').

3. Dispositif d'information et d'affichage selon la revendication 1, **caractérisé en ce que** le système de bus de données (400) est conçu comme un système filaire, par exemple un système basé sur la norme RS485, ou comme un système sans fil, tel qu'un Wireless LAN, un système Bluetooth ou système à infrarouges.

4. Dispositif d'information et d'affichage selon l'une des revendications 1 à 3, **caractérisé en ce que** aussi bien des moyens de stockage (7, 7A, 7B, 7C) que des interfaces (9, 900) pour la transmission sans fil (8) de données (8A, 8B) communiquées à l'avion, ou des interfaces pour la transmission de données issues du système avionique de l'avion, sont prévus comme moyens de saisie d'informations (7, 8).

5. Dispositif d'information et d'affichage selon l'une des revendications 1 à 4, **caractérisé en ce que** des CD-ROM (7A), des cartes mémoire (7B), des disquettes (7C) et/ou des mémoires USB sont prévus comme moyens de stockage (7).

6. Dispositif d'information et d'affichage selon l'une des revendications 1 à 5, **caractérisé en ce que** des systèmes reliant le sol et l'avion (8A) ou une technique par satellite (8B) sont utilisés comme technique de transmission sans fil (8).

7. Dispositif d'information et d'affichage selon l'une des revendications 1 à 6, **caractérisé en ce que** une saisie/commande directe, par le biais d'un panneau de commande (11A, 120A) et/ou d'un clavier externe connectable (12, 120B), est prévue pour l'unité de calcul et de commande (10, 11 ; 120).

8. Dispositif d'information et d'affichage selon l'une des revendications 1 à 7, **caractérisé en ce que** l'unité de contrôle et de commande (110) et l'unité de calcul et de commande (120) sont réunis en une unité d'appareil (130).

9. Dispositif d'information et d'affichage selon l'une des revendications 1 à 8, **caractérisé en ce que** l'actionnement des différents écrans d'affichage (3, 3', 300, 300') pour la transmission d'informations est relatif aux sièges et/ou dépendant de la répartition en classes de passagers par un adressage individuel des informations.

10. Dispositif d'information et d'affichage selon l'une des revendications 1 à 9, **caractérisé en ce que** l'écran d'affichage (3, 300) comporte un affichage commun pour les consignes et les contenus d'informations.
